(19) Europäisches Patentamt / European Patent Office / Office européen des brevets

(11) **EP 3 905 094 B1**

(12) **EUROPEAN PATENT SPECIFICATION**

(45) Date of publication and mention
of the grant of the patent:
**04.05.2022 Bulletin 2022/18**

(21) Application number: **20172264.2**

(22) Date of filing: **30.04.2020**

(51) International Patent Classification (IPC):
*G06F 21/86* (2013.01)     *H04L 9/08* (2006.01)

(52) Cooperative Patent Classification (CPC):
**G06F 21/86; H04L 9/0855**

(54) **SYSTEM AND METHOD FOR DISTRIBUTING QUANTUM-SAFE KEYS OVER LONGER DISTANCES**

SYSTEM UND VERFAHREN ZUR VERTEILUNG VON QUANTUM-SICHEREN SCHLÜSSELN ÜBER LÄNGERE ENTFERNUNGEN

SYSTÈME ET PROCÉDÉ POUR DISTRIBUER DES CLÉS RÉSISTANTES AUX ATTAQUES QUANTIQUES SUR DE LONGUES DISTANCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.11.2021 Bulletin 2021/44**

(73) Proprietor: **Deutsche Telekom AG**
**53113 Bonn (DE)**

(72) Inventors:
• **GUNKEL, Matthias**
**64291 Darmstadt (DE)**
• **WISSEL, Felix**
**64372 Ober-Ramstadt (DE)**

(74) Representative: **Raible Deissler Lehmann**
**Patentanwälte PartG mbB**
**Senefelderstrasse 26**
**70176 Stuttgart (DE)**

(56) References cited:
**WO-A1-2019/128785     US-A1- 2010 299 526**
**US-B1- 10 121 026**

## Description

The present invention refers to a method and a system for distributing quantumsafe keys over longer distances including intermediate quantum nodes, which, however do not have to be so-called trusted nodes and which are also not necessarily equipped with quantum repeaters.

Particularly, the invention refers to a method and a system to mitigate range limitations in QKD (Quantum Key Distribution) mechanisms.

The term "quantum cryptography" refers to the joint application of classical, symmetrical algorithms and techniques based on quantum physical laws of nature to generate a common and secret key between two communication partners, the communication partners being also called in the following Alice and Bob.

For confidentiality and authenticity of messages and/or for proof of the integrity of those messages, algorithms are used which are known in the art, such as AES (Advanced Encryption Standard) or so-called One Time Pads (OTPs). For the key exchange, mathematical methods according, for example, to the DH algorithm (after W. Diffie, M. Hellmann and also R. Merkle) either in the space of positive integers or in the space of elliptic curves (DHEC - Diffie Hellman Elliptic Curve) are used.

Due to the progress in the development of quantum computers it will be increasingly likely that classical and complexity-based algorithms will no longer be used for the key exchange. A possible counter measure is the usage of quantum mechanical procedures which deters an attacker from getting knowledge about the common secret between Alice and Bob.

In order to use the quantum mechanical features of light efficiently, it is necessary to operate with single photons or with highly damped laser pulses. Such laser pulses often have on average less than one photon within a pulse. At typical damping values within a glass fiber ($\alpha$ = 0,21 - 0,28 dB per km with $\alpha$ being the fiber damping in dB/km) the rate of the "surviving" photons decreases exponentially with the distance between Alice and Bob. Thus, the reachable key rate is also influenced, particularly limited, and at distances of about 50 km an efficiently usable key rate of several kBits/s is obtained. A known approximation for estimating the key rate R as a function of the distance L is given by the formula:

$$ R(L) = R_0 \, 10^{\wedge} \left( -\frac{\alpha L}{10} \right) $$

wherein $R_0$ corresponds to the maximum achievable key rate, if the QKD sender and the QKD receiver are positioned back to back of each other, and $R_0$ is given, for example as 50 kBits/s.

In order to supply longer distances from end-to-end with quantum keys, so-called trusted nodes are used. The name "trusted" quantum node implies that Alice and Bob have to trust such intermediate quantum node because at each such trusted quantum node the currently secret keys are available in plain text.

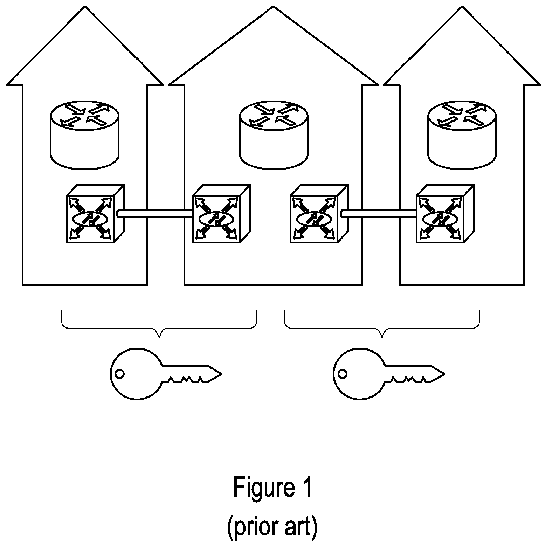

The basic principle of such single trusted quantum node is schematically shown in Figure 1 which is described below. The left and right network elements in the outer positions are assigned to the communication partners Alice (left) and Bob (right). On both sides, the middle position, i.e. the trusted node, has a separate QKD system. It does not matter here which technology is used. The trusted node, called here "Ted", is enabled to generate a secret key with Alice (left) and separately therefrom a secret key with Bob (right). The secret key with Alice is called in the following "left key" and the secret key with Bob is called "right key".

A method how an end-to-end key between Alice and Bob can be generated, operates as follows: as per agreement Ted selects one of the two keys, for example the left one with Alice and performs an XOR operation with the right key. Each single bit of the left key is compared with the corresponding bit of the right key and, therefrom, a new bit value is determined according to table 1. The result of such bit by bit manipulation is transferred from Ted to Bob. As the XOR operation is a self-inverse mapping, Bob is enabled, since he has knowledge of the right key, to reconstruct therefrom the left key in that he applies the XOR operation a second time. It could also be stated that Ted uses the right key as One-Time-Pad in order to transfer the left key in encrypted form to Bob. The right key is discarded afterwards, i.e. is not used any longer.

Table 1: bit wise XOR Operation

|  |  | Bit value of the left key | |
|---|---|---|---|
|  |  | **0** | **1** |
| Bit value of the right key | **0** | **0** | **1** |
|  | **1** | **1** | **0** |

The usage of trusted nodes is quite elegant but has the disadvantage that a huge number of overhead keys, which are needed to generate end-to-end keys, has to be provided and, furthermore, that the communication partners Alice and Bob are obliged to trust Ted. This might be acceptable to secure an own critical infrastructure wherein a network operator uses its own trusted nodes. However, it is excluded if a secure communication should also be offered to external users.

US 2010/299526 A1 refers to a method of performing quantum key distribution across a network. The method involves a first node first agreeing a quantum key with a first intermediate node in the path. Next the intermediate node exchanges a quantum signal with the next node in the path which is a targeted node. The intermediate node communicates with the first node using the previous established quantum key details of the quantum signal sent or received by the intermediate node. The first node then performs a key agreement step to agree a quantum key directly with the targeted node. Having established a quantum key with the current targeted node the method can be repeated but with the next node in the network path as the targeted node until a destination node is reached. The final quantum key agreed with the destination node can then be used for encrypting communication between those nodes across the network.

Therefore, it is an object of the present invention to avoid a limitation of range of the single photon technology without using trusted nodes.

To resolve the above-mentioned object, the present invention provides a method with the features of the independent claim 1, a system with the features of the independent claim 9 and an intermediate quantum node with the features of the independent claim 15. Further embodiments are described by the dependent claims and the following description.

The present invention provides a method for controlling a quantum key distribution between a first quantum node and a second quantum node over longer distances of a quantum connection including at least one intermediate untrusted quantum node, each quantum node comprising at least one quantum key distribution module and at least one key management system, the method comprising at least:

> a) providing, at each of the at least one intermediate untrusted quantum node, a mechanical robust containment for the at least one quantum key distribution module (QKD module) and the at least one key management system (KMS), the mechanical robust containment being configured to prevent an instant physical access to the at least one quantum key distribution module and the at least one key management system, respectively,
> b) supplying, at each of the at least one intermediate untrusted quantum node, the mechanical robust containment with an input unit for keying in a respective security code to access the at least one quantum key distribution module and the at least one key management system of the respective intermediate untrusted quantum node,
> c) generating the respective security code using cryptographic key material which is to be made available exclusively to at least one of the first quantum node and the second quantum node, and the respective one of the at least one intermediate untrusted quantum node.

If two end nodes, generally designated as Alice and Bob, of a fibre-based quantum key exchange have a distance within the glass fibre of about 50 km to 80 km, both end nodes can be directly connected via one single QKD system (quantum key distribution system). With a correct implementation an information theoretical security against eavesdropping can be realized. In the case that Alice and Bob are many hundreds of kilometres apart, so-called trusted nodes, as described above, enable a logical range extension of the key distribution mechanism over longer distances. However, Alice and Bob have to trust those intermediate nodes, because at each such intermediate quantum node the currently secret keys are available in plain text. Technically such kind of extension of range is based on a bitwise XOR-operation of the key which is to be transported with a transport key. Thus, each intermediate quantum node which knows its own transport key, can reconstruct the key which is to be transported and forward that key by means of the same mechanism onto the subsequent route. Such kind of encryption is also called One-Time-Pad as the transport key may only be used exactly once in order to guarantee a secure key exchange.

It was an object of the present disclosure to provide a QKD system which remains based on QKD intermediate nodes, but where the provider has demonstrably no direct access to the local key material from a customer's perspective, i.e. from the perspective of Alice and/or Bob.

It is common practice that two end nodes of a QKD system always withhold a part of the generated key material for their own use and do not pass on this part of the key material to other nodes independent of the actual technology and protocol used. With such shared secret, Alice and Bob are enabled to proof mutually their integrity or their authenticity. Thus, it can be shown on hardware side that two end nodes, also called herein first quantum node and second quantum node, respectively, are not corrupted.

A shared secret is a piece of data, known only to the parties involved, in a secure communication. The shared secret can be a big number, or an array of randomly chosen bytes. The shared secret is either shared beforehand between the communicating parties, in which case it can also be called a pre-shared key, or it is created at the start of the communication session by using a key-agreement protocol, for instance using public-key cryptography such as Diffie-Hellman or using symmetric-key cryptography such as Kerberos.

The proposed method provides for two essential measures which make it possible to also provide for intermediate untrusted nodes on the quantum connecting link, i.e. the quantum connection between the first quantum node and the second quantum node.

First of all, all QKD modules and KMS systems of an operating site, i.e. of an intermediate untrusted quantum node are provided with a mechanical robust containment. Such mechanical robust containment excludes a direct access to device internals. Although such kind of mechanical robust containment does not provide a theoretical protection against any attackers, any kind of attack should be directly detectable. A competent attacker might know means to overcome the intended mechanics, e.g. by means of a welding torch in the case of a metallic containment. However, the mechanical robust containment is constructed such that an unauthorized access leaves traces. A violent opening of a bonnet of the containment could, for example, pop a dye cartridge. The escaping color should then not be easy to remove. Alternatively or supplementary, single parts, that are difficult to replace, could be automatically and actively destroyed, if the containment is opened without permission, so that a further operation of the respective intermediate untrusted quantum node is not possible any more.

From the perspective of a customer, i.e. of Alice and/or Bob, the initially used trusted node is replaced by an intermediate untrusted node which does not require that the customer has to trust his provider, but is enabled to detect and trace back any manipulations. Such manipulations can be detected and proved by a specially designed quantum key as second essential measure.

At the end node of the customer, i.e. at Alice and/or Bob, starts and/or terminates the quantum connection, also called QKD connection. That means that there is a larger number of quantum keys with a proven safety record. The other remote site which immediately shares that secret is exactly the previously intermediate trusted quantum node that is now supposed to become an intermediate untrusted node or the first one in a chain of multiple intermediate trusted nodes that is now supposed to become an intermediate untrusted quantum node.

As mentioned above, it is known that the QKD devices, i.e. the QKD modules withhold a specific part of the self-generated key material practically for own use.

As proposed by the present invention, a part of the self-generated keys is used and reserved for the protection/safeguarding of the mechanical robust containment of an intermediate untrusted node. The reserved keys must not be handed to other components, but must remain always with the so secured system, i.e. with the respective customer and the respective intermediate untrusted quantum node. Only the customer, i.e. Alice and/or Bob has direct access to the respective QKD module on his side of the quantum connection and knows the respective reserved key.

According to the invention it is envisaged that the customer can request at any time, even without advance notice, physical access to the respective intermediate untrusted quantum node, particularly to the mechanical robust containment of the respective intermediate untrusted quantum node. There he identifies himself as authorised to open the bonnet of the containment by entering the specific key, i.e. the security code known only to him, into the input unit. Therefore, only the customer can get direct access to the internals of the QKD modules, thus, also to the XOR-operation in order to reconstruct the secret key to be conveyed.

According to an embodiment of the proposed method, generating the respective security code is triggered by exactly one of the first quantum node and the second quantum node, using a respective security code specific management command. That means that the generation of the security code is initiated on the customer side, i.e. at the first quantum node or at the second quantum node each of which representing a respective customer at the end nodes of the quantum connection.

According to a further aspect of the proposed method, the respective security code is generated such that it has a pre-determined life cycle (i.e. life time) before being discarded. This ensures that the security code will not fall into the wrong hands.

According to a further aspect of the present invention, the respective security code is a quantum secured security code.

According to still a further embodiment of the proposed method at least one of the first quantum node and the second quantum node can request access to a respective one of the at least one intermediate untrusted quantum node at any time by entering the respective security code which is known only to the respective one of the first quantum node and the second quantum node and the respective one of the at least one intermediate untrusted quantum node, on the input unit of the mechanical robust containment of respective one of the at least one intermediate untrusted quantum node.

Further, at least one of the first quantum node and the second quantum node can request access, starting from the respective one of the first quantum node and the second quantum node, along all of the at least one intermediate untrusted quantum node in the exact order in which they are located on the quantum connection. A different order of control requires a certain degree of customer confidence in the network provider/operator which could have manipulated the previously uncontrolled intermediate untrusted quantum nodes.

Further advantageous access to the respective mechanical robust containment takes place for each one of the at least one intermediate untrusted quantum node with a different security code, specially created for this purpose. An access to the respective mechanical robust containment includes access to the internals of the respective at least one quantum key distribution module (QKD module) and the respective at least one key management system (KMS) which are enclosed by the respective mechanical robust containment.

Alternatively, at least one of the first quantum node and the second quantum node can request access, starting from the respective one of the first quantum node and the second quantum node, randomly to a subset of the at least one intermediate untrusted quantum node. Such spot check of the at least one intermediate untrusted quantum node is to be triggered by a respective command on the side of the customer, i.e. on the side of the first quantum node and/or the second quantum node. The reserved keys, i.e. the respective security codes which are to be used for the proposed method, i.e. for the control of the respective mechanical robust containments are distributed to the respective mechanical robust containments to be controlled, i.e. to the respective intermediate untrusted quantum nodes, by means of a procedure which is similar to the XOR-forwarding procedure.

Due to the proposed two essential measures it is possible to also provide for untrusted nodes on the quantum connecting link (i.e. the quantum connection) since the customer retains a portion of sovereignty over the equipment, i.e. the QKD modules and the KMS along the quantum connection which provides the customer with tap-proof quantum keys along the quantum connection.

The present disclosure also refers to a system, i.e. to a quantum distribution network, for controlling a quantum key distribution between a first quantum node and a second quantum node over longer distances of a quantum connection including at least one intermediate untrusted quantum node, the system, i.e. the quantum distribution network, comprises at least:

- the at least one intermediate untrusted quantum node which is located on the quantum connection between the first quantum node and the second quantum node and which comprises at least one quantum key distribution module and at least one key management system and a mechanical robust containment surrounding the at least one quantum key distribution module and the at least one key management system, the mechanical robust containment being configured to prevent an instant physical access to the at least one quantum key distribution module and the at least one key management system, respectively,
- the first quantum node which comprises at least one quantum key distribution module and at least one key management system, and
- the second quantum node which comprises at least one quantum key distribution module and at least one key management system,

wherein, at each of the at least one intermediate untrusted quantum node, the mechanical robust containment is supplied with an input unit for keying in a respective security code to access the at least one quantum key distribution module and the at least one key management system of the respective intermediate untrusted quantum node, the respective security code being generated using cryptographic key material which is to be made available exclusively to at least one of the first quantum node and the second quantum node asking for access, and the respective one of the at least one intermediate untrusted quantum node.

According to one possible embodiment of the proposed system the respective security code has a predetermined life cycle, i.e. a pre-determined life time before being discarded.

According to one possible embodiment of the proposed system the respective security code is a quantum secured security code.

According to a further possible embodiment of the proposed system each, the first quantum node and the second quantum node, is configured to trigger the generation of a respective security code and to forward the respective security code to the respective intermediate untrusted quantum node for whose containment access is requested.

According to still a further aspect, access takes place for each one of the at least one intermediate untrusted quantum node with a different security code, specially created for this purpose.

The respective mechanical robust containment is designed to detect an unauthorized access.

The invention further refers to an intermediate untrusted quantum node as a component of the above described system.

The invention is further defined in the following examples. It should be understood that these examples, by indicating preferred embodiments of the invention, are given by way of illustration only. From the above discussion and the examples, one skilled in the art can ascertain the essential characteristics of this invention and without departing from the scope thereof, can make various changes and modifications of the invention to adapt it to various uses and conditions. The invention is defined by the appended claims.

**Brief description of the drawings**

    Figure 1 shows schematically the principle of operation of an intermediate trusted node as known from the prior art.
    Figure 2 shows schematically the principle of operation of intermediate quantum nodes as intermediated untrusted quantum nodes according to an embodiment of the proposed method.

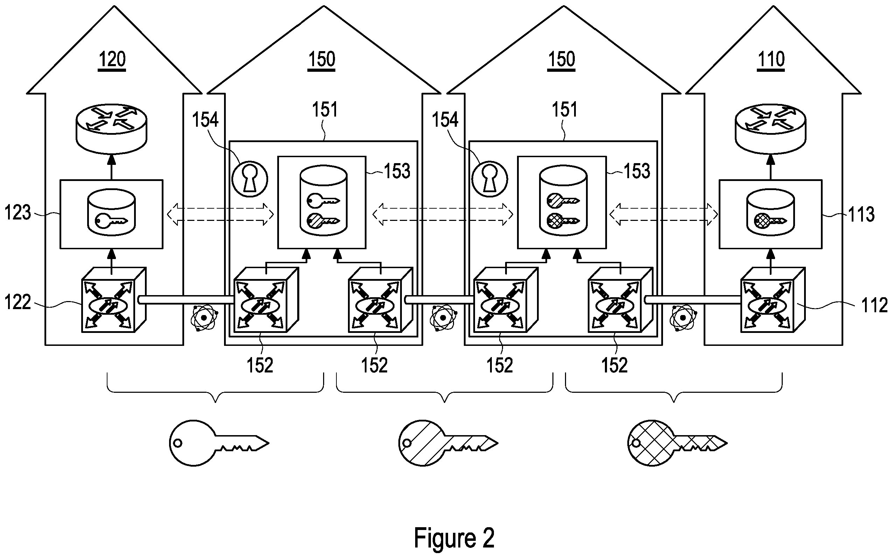

Figure 2 shows schematically the principle of operation of intermediate quantum nodes as untrusted quantum nodes according to an embodiment of the proposed method. The right network element 110 and the left network element 120 in the outer positions of a quantum connection are assigned to the communication partners Bob and Alice, i.e. to the customers. At the middle positions there are two intermediate quantum nodes 150. Generally, it is possible that there are still more intermediate quantum nodes along the quantum connection between Alice and Bob. The number of intermediate quantum nodes 150 depends on the physical distance between Alice and Bob and on other side conditions. Each of the intermediate quantum nodes 150 has at least one QKD system 152, in the scenario shown here, two QKD systems, one QKD system 152 for each interface to the two adjacent quantum nodes along the quantum connection. The first quantum node, called Bob 110 has a QKD system 112 which is configured to generate quantum keys. The second quantum node, called Alice 120 has a QKD system 122 which is also configured to generate quantum keys. A method how an end-to-end key between Bob 110 and Alice 120 can be generated, operates as follows: as per agreement the intermediate quantum nodes 150, each selects one of the keys of the adjacent quantum nodes 110, 120, respectively, and performs an XOR operation with a key generated by the respective intermediate quantum node itself. Each single bit of the one key is compared with the corresponding bit of the other key and, therefrom, a new bit value is determined. The result of such bit by bit manipulation is transferred from the respective intermediate quantum node 150 to the respective adjacent quantum node 110, 120. As the XOR operation is a self-inverse mapping, each quantum node is enabled, since he has knowledge of his own key, to reconstruct therefrom the other key in that he applies the XOR operation a second time. It could also be stated that intermediate quantum nodes 150 use their own keys as One-Time-Pad in order to transfer the other key in encrypted form to the next adjacent quantum node along the quantum connection. The own key is discarded afterwards, i.e. is not used any longer.

For the key exchange, mathematical methods according, for example, to the DH algorithm (after W. Diffie, M. Hellmann and also R. Merkle) either in the space of positive integers or in the space of elliptic curves (DHEC - Diffie Hellman Elliptic Curve) can be used.

Each quantum node, the quantum nodes 110, 120 at the outer positions of the quantum connection as well as the intermediate untrusted quantum nodes 150 at the middle positions of the quantum connection, has a respective key management system, i.e. a KMS 113 at first quantum node 110, a KMS 123 at second quantum node 120 and a respective KMS 153 at the respective intermediate untrusted quantum node 150. The intermediate untrusted quantum nodes 150, each one comprises a respective mechanical robust containment 151 surrounding the quantum key distribution modules 152 and the key management system 153, the mechanical robust containment 151 being configured to prevent an instant physical access to the quantum key distribution modules 152 and the key management system 153. An access to internals of the respective quantum key distribution modules 152 and the respective key management system 153 is only possible by destruction of the mechanical robust containment 151. The keyhole 154 illustrates an input unit, e.g. a display of the mechanical robust containment 151 in which a security code must be entered wherein the security code is generated using cryptographic key material of the respective customer and which is to be made available exclusively to the respective one of the at least one intermediate untrusted quantum node 150 which is to be controlled. Besides the customer, i.e. one of the quantum nodes 110, 120 which intends to control the integrity of the mechanical robust containment 151 the security code is known only to the respective intermediate untrusted quantum node 150 whose mechanical robust containment 151 is to be controlled, but not to the network provider. The respective security code is generated such that it has a pre-determined life cycle before being discarded. The respective security code is a quantum secured security code. Access takes place for each one of the at least one intermediate untrusted quantum node 150 with a different security code, specially created for this purpose. A respective customer 110, 120 can request access to any intermediate untrusted quantum node 150 along the quantum connection that has been established for that respective customer 110, 120 and is therefore assigned to that customer 110, 120. Such respective access can be requested in the exact order of the intermediate quantum nodes along the quantum connection or randomly. Generating the respective security code is triggered by exactly one of the customers 110, 120, i.e. the first quantum node 110 or the second quantum node 120, using a respective security code specific management command.

In the case of multiple customers which use QKD equipment at an intermediate untrusted quantum node 150 of the network provider, either all QKD modules and KMS must be located in different containments (if the customers do not trust each other) or the customers share a mechanical robust containment (if the customers trust each other but not the network provider). In the case that one of the multiple customers is in the process of gaining access to an intermediate untrusted quantum node in order to control the integrity of the mechanical robust containment, the network provider may inform the other customers so that they do not generate keys using that intermediate untrusted quantum node at the same time when the control is on-going.

Some cases such as fault management require close cooperation between customer and network provider. In such cases, if there is an appropriate basis of trust, the customer could hand over to the network provider once or as often as necessary one of the special security codes intended only for the opening of the mechanical robust containment of a respective intermediate untrusted quantum node.

Essential advantages of the proposed method and system are:

- no unconditional trust of the customers in intermediate trusted nodes of a network provider along a quantum connection is necessary
- QKD modules and KMS are protected against mechanical force
- Only the respective customer knows the security code to get access to the safety-relevant parts of the respective intermediate quantum nodes, such as the QKD and the KMS of the respective intermediate quantum nodes
- during a possible troubleshooting customer and network provider have to cooperate actively
- active marketing of QKD-based keys for a secure communication to external customers, such as business partners.

**List of reference signs**

| | |
|---|---|
| 110 | network element, quantum node |
| 112 | QKD system at quantum node 110 |
| 113 | KMS at quantum node 110 |
| 120 | network element, quantum node |
| 122 | QKD system at quantum node 120 |
| 123 | KMS at quantum node 120 |
| 150 | intermediate untrusted quantum node |
| 151 | mechanical robust containment |
| 152 | QKD system |
| 153 | KMS |
| 154 | keyhole, input unit |

**Claims**

1. A method for controlling a quantum key distribution between a first quantum node (110) and a second quantum node (120) over longer distances of a quantum connection including at least one intermediate untrusted quantum node (150), each quantum node (110, 120, 150) comprising at least one quantum key distribution module (112, 122, 152) and at least one key management system (113, 123, 153), wherein the at least one intermediate untrusted quantum node (150) is located on the quantum connection between the first quantum node (110) and the second quantum node (120), the method comprising at least:

a) providing, at each of the at least one intermediate untrusted quantum node (150), a mechanical robust containment (151) surrounding the at least one quantum key distribution module (152) and the at least one key management system (153), the mechanical robust containment (151) being configured to prevent an instant physical access to the at least one quantum key distribution module (152) and the at least one key management system (153),
b) supplying, at each of the at least one intermediate untrusted quantum node (150), the mechanical robust containment (151) with an input unit (154) for keying in a respective security code which is used to authorize an opening of a bonnet of the mechanical robust containment to access the at least one quantum key distribution module (152) and the at least one key management system (153) of the respective intermediate untrusted quantum node (150),
c) generating the respective security code using cryptographic key material which has been withhold for own use from a part of self-generated key material between the respective one of the at least one intermediate untrusted quantum node and the respective first or second quantum node during quantum key distribution and which is to be made available exclusively to at least one of the first quantum node (110) and the second quantum node (120) asking for access, and the respective one of the at least one intermediate untrusted quantum node (150) wherein generating the respective security code is initiated at the first quantum node or at the second quantum node each of which representing a respective customer.

2. The method according to claim 1 wherein generating the respective security code is triggered by exactly one of the first quantum node (110) and the second quantum node (120), using a respective security code specific management command.

3. The method according to claim 1 or 2 wherein the respective security code is generated such that it has a pre-determined life cycle before being discarded.

4. The method according to any one of the preceding claims, wherein the respective security code is a quantum secured security code.

5. The method according to any one of the preceding claims, wherein at least one of the first quantum node (110) and the second quantum node (120) can request access to a respective one of the at least one intermediate untrusted quantum node (150) at any time by entering the respective security code which is known only to the respective one of the first quantum node (110) and the second quantum node (120) and the respective one of the at least one intermediate untrusted quantum node (150), on the input unit of the respective one of the at least one intermediate untrusted quantum node (150).

6. The method according to claim 5, wherein at least one of the first quantum node (110) and the second quantum node (120) can request access, starting from the respective one of the first quantum node (110) and the second quantum node (120), along all of the at least one intermediate untrusted quantum node (150) in the exact order in which they are located on the quantum connection.

7. The method according to claim 5, wherein at least one of the first quantum node (110) and the second quantum node (120) can request access, starting from the respective one of the first quantum node (110) and the second quantum node (120), randomly to a subset of the at least one intermediate untrusted quantum node (150).

8. The method according to claim 5, 6 or 7 wherein access takes place for each one of the at least one intermediate untrusted quantum node (150) with a different security code, specially created for this purpose.

9. A system for controlling a quantum key distribution between a first quantum node (110) and a second quantum node (120) over longer distances of a quantum connection including at least one intermediate untrusted quantum node (150), the system comprises at least:

- the at least one intermediate untrusted quantum node (150) which is located on the quantum connection between the first quantum node (110) and the second quantum node (120) and which comprises at least one quantum key distribution module (152) and at least one key management system (153) and a mechanical robust containment (151) surrounding the at least one quantum key distribution module (152) and the at least one key management system (153), the mechanical robust containment (151) being configured to prevent an instant physical access to the at least one quantum key distribution module (152) and the at least one key management system (153),
- the first quantum node (110) which comprises at least one quantum key distribution module (112) and at least one key management system (113), and
- the second quantum node (120) which comprises at least one quantum key distribution module (122) and at least one key management system (123),

wherein, at each of the at least one intermediate untrusted quantum node (150), the mechanical robust containment (151) is supplied with an input unit (154) for keying in a respective security code which is used to authorize an opening of a bonnet of the mechanical robust containment to access the at least one quantum key distribution module (152) and the at least one key management system (153) of the respective intermediate untrusted quantum node (150), the respective security code being generated using cryptographic key material which has been withhold for own use from a part of self-generated key material between the respective one of the at least one intermediate untrusted quantum node and the respective first or second quantum node during quantum key distribution and which is to be made available exclusively to at least one of the first quantum node (110) and the second quantum node (120) asking for access, and the respective one of the at least one intermediate untrusted quantum node (150) wherein generating the respective security code is initiated at the first quantum node or at the second quantum node each of which representing a respective customer.

10. The system according to claim 9 wherein the respective security code has a pre-determined life cycle before being discarded.

11. The system according to any one of the claims 9 or 10, wherein the respective security code is a quantum secured security code.

12. The system according to any one of the claims 9 to 11, wherein each, the first quantum node (110) and the second quantum node (120), is configured to trigger the generation of a respective security code and to forward the respective security code to the respective intermediate untrusted quantum node (150) for whose containment (151) access is requested.

13. The system according to any one of claims 9 to 12 wherein access takes place for each one of the at least one intermediate untrusted quantum node (150) with a different security code, specially created for this purpose.

14. The system according to any one of claims 9 to 13 wherein the respective mechanical robust containment (151) is designed to detect an unauthorized access.

15. An intermediate untrusted quantum node (150) as defined in the system according to any one of claims 9 to 14.

**Patentansprüche**

1. Verfahren zum Kontrollieren eines Quantenschlüsselaustausches zwischen einem ersten Quantenknoten (110) und einem zweiten Quantenknoten (120) über längere Entfernungen einer Quantenverbindung, die mindestens einen intermediären nicht vertrauenswürdigen Quantenknoten (150) beinhaltet, wobei jeder Quantenknoten (110, 120, 150) mindestens ein Quantenschlüsselaustauschmodul (112, 122, 152) und mindestens ein Schlüsselverwaltungssystem (113, 123, 153) umfasst, wobei sich der mindestens eine intermediäre nicht vertrauenswürdige Quantenknoten (150) auf der Quantenverbindung zwischen dem ersten Quantenknoten (110) und dem zweiten Quantenknoten (120) befindet, wobei das Verfahren mindestens Folgendes umfasst:

a) an jedem der mindestens einen intermediären nicht vertrauenswürdigen Quantenknoten (150) das Bereitstellen einer mechanischen robusten Einschließung (151), die das mindestens eine Quantenschlüsselaustauschmodul (152) und das mindestens eine Schlüsselverwaltungssystem (153) umgibt, wobei die mechanische robuste Einschließung (151) dazu konfiguriert ist, einen unmittelbaren physischen Zugriff auf das mindestens eine Quantenschlüsselaustauschmodul (152) und das mindestens eine Schlüsselverwaltungssystem (153) zu verhindern,

b) an jedem der mindestens einen intermediären nicht vertrauenswürdigen Quantenknoten (150) das Versehen der mechanischen robusten Einschließung (151) mit einer Eingabeeinheit (154) zum Eingeben eines jeweiligen Sicherheitscodes, der verwendet wird, um ein Öffnen einer Haube der mechanischen robusten Einschließung zu autorisieren, um auf das mindestens eine Quantenschlüsselaustauschmodul (152) und das mindestens eine Schlüsselverwaltungssystem (153) des jeweiligen intermediären nicht vertrauenswürdigen Quantenknotens (150) zuzugreifen,

c) das Erzeugen des jeweiligen Sicherheitscodes unter Verwendung von kryptographischem Schlüsselmaterial, das für den eigenen Gebrauch von einem Teil des selbst erzeugten Schlüsselmaterials zwischen dem jeweiligen einen des mindestens einen intermediären nicht vertrauenswürdigen Quantenknotens und dem jeweiligen ersten oder zweiten Quantenknoten während des Quantenschlüsselaustauschs zurückgehalten wurde und das mindestens einem der um Zugriff bittenden Quantenknoten, dem ersten Quantenknoten (110) und/oder dem zweiten Quantenknoten (120), und dem jeweiligen einen des mindestens einen intermediären nicht vertrauenswürdigen Quantenknotens (150) exklusiv zur Verfügung zu stellen ist, wobei das Erzeugen des jeweiligen Sicherheitscodes an dem ersten Quantenknoten oder an dem zweiten Quantenknoten initiiert wird, von denen jeder einen jeweiligen Kunden darstellt.

**2.** . Verfahren nach Anspruch 1, wobei das Erzeugen des jeweiligen Sicherheitscodes durch genau einen Quantenknoten, den ersten Quantenknoten (110) oder den zweiten Quantenknoten (120), unter Verwendung eines jeweiligen sicherheitscodespezifischen Verwaltungsbefehls ausgelöst wird.

**3.** . Verfahren nach Anspruch 1 oder 2, wobei der jeweilige Sicherheitscode so generiert wird, dass er einen vorbestimmten Lebenszyklus hat, ehe er verworfen wird.

**4.** . Verfahren nach einem der vorhergehenden Ansprüche, wobei der jeweilige Sicherheitscode ein quantensicherer Sicherheitscode ist.

**5.** . Verfahren nach einem der vorhergehenden Ansprüche, wobei der erste Quantenknoten (110) und/oder der zweite Quantenknoten (120) jederzeit Zugriff auf jeweils einen der mindestens einen intermediären nicht vertrauenswürdigen Quantenknoten (150) anfordern kann durch Eingabe des jeweiligen nur dem ersten Quantenknoten (110) oder dem zweiten Quantenknoten (120) und dem jeweiligen einen der mindestens einen intermediären nicht vertrauenswürdigen Quantenknoten (150) bekannten Sicherheitscodes an der Eingabeeinheit des jeweiligen einen der mindestens einen intermediären nicht vertrauenswürdigen Quantenknoten (150).

**6.** . Verfahren nach Anspruch 5, wobei der erste Quantenknoten (110) und/oder der zweite Quantenknoten (120), jeweils ausgehend von entsprechend dem ersten Quantenknoten (110) oder dem zweiten Quantenknotens (120), Zugriff auf alle der mindestens einen intermediären nicht vertrauenswürdigen Quantenknoten (150) in genau der Reihenfolge anfordern kann, in der sie sich auf der Quantenverbindung befinden.

**7.** . Verfahren nach Anspruch 5, wobei der erste Quantenknoten (110) und/oder der zweite Quantenknoten (120), jeweils ausgehend von entsprechend dem ersten Quantenknoten (110) oder dem zweiten Quantenknotens (120), einen Zufallszugriff auf eine Teilmenge des mindestens einen intermediären nicht vertrauenswürdigen Quantenknotens (150) anfordern kann.

**8.** . Verfahren nach Anspruch 5, 6 oder 7, wobei der Zugriff für jeden der mindestens einen intermediären nicht vertrauenswürdigen Quantenknoten (150) mit einem anderen, speziell für diesen Zweck erstellten Sicherheitscode erfolgt.

**9.** . System zum Kontrollieren eines Quantenschlüsselaustausches zwischen einem ersten Quantenknoten (110) und einem zweiten Quantenknoten (120) über längere Entfernungen einer Quantenverbindung, die mindestens einen intermediären nicht vertrauenswürdigen Quantenknoten (150) beinhaltet, wobei das System mindestens Folgendes umfasst:

- den mindestens einen intermediären nicht vertrauenswürdigen Quantenknoten (150), der sich auf der Quantenverbindung zwischen dem ersten Quantenknoten (110) und dem zweiten Quantenknoten (120) befindet und der mindestens ein Quantenschlüsselaustauschmodul (152) und mindestens ein Schlüsselverwaltungssystem (153) sowie eine mechanisehe robuste Einschließung (151) umfasst, die das mindestens eine Quantenschlüsselaustauschmodul (152) und das mindestens eine Schlüsselverwaltungssystem (153) umgibt, wobei die mechanische robuste Einschließung (151) dazu konfiguriert ist, einen unmittelbaren physischen Zugriff auf das mindestens eine Quantenschlüsselaustauschmodul (152) und das mindestens eine Schlüsselverwaltungssystem (153) zu verhindern,

- den ersten Quantenknoten (110), der mindestens ein Quantenschlüsselaustauschmodul (112) und mindestens ein Schlüsselverwaltungssystem (113) umfasst, und

- den zweiten Quantenknoten (120), der mindestens ein Quantenschlüsselaustauschmodul (122) und mindestens ein Schlüsselverwaltungssystem (123) umfasst,

wobei an jedem der mindestens einen intermediären nicht vertrauenswürdigen Quantenknoten (150) die mechanisch robuste Einschließung (151) mit einer Eingabeeinheit (154) zum Eingeben eines jeweiligen Sicherheitscodes versehen ist, der verwendet wird, um ein Öffnen einer Haube der mechanischen robusten Einschließung zu autorisieren, um auf das mindestens eine Quantenschlüsselaustauschmodul (152) und das mindestens eine Schlüsselverwaltungssystem (153) des jeweiligen intermediären nicht vertrauenswürdigen Quantenknotens (150) zuzugreifen, wobei der jeweilige Sicherheitscode unter Verwendung von kryptographischem Schlüsselmaterial erzeugt wird, das für den eigenen Gebrauch von einem Teil des selbst erzeugten Schlüsselmaterials zwischen dem jeweiligen einen des mindestens einen intermediären nicht vertrauenswürdigen Quantenknotens und dem jeweiligen ersten oder zweiten Quantenknoten während des Quantenschlüsselaustauschs zurückgehalten wurde und das mindestens einem der um Zugriff bittenden Quantenknoten, dem ersten Quantenknoten (110) und/oder dem zweiten Quantenknoten (120), und dem jeweiligen einen des mindestens einen intermediären nicht vertrauenswürdigen Quantenknotens (150) exklusiv zur Verfügung zu stellen ist, wobei das Erzeugen des jeweiligen Sicherheitscodes an dem ersten Quantenknoten oder an dem zweiten Quantenknoten initiiert wird, von denen jeder einen jeweiligen Kunden darstellt.

10. . System nach Anspruch 9, wobei der jeweilige Sicherheitscode einen vorbestimmten Lebenszyklus hat, ehe er verworfen wird.

11. . System nach einem der Ansprüche 9 oder 10, wobei der jeweilige Sicherheitscode ein quantensicherer Sicherheitscode ist.

12. . System nach einem der Ansprüche 9 bis 11, wobei der erste Quantenknoten (110) und der zweite Quantenknoten (120) jeweils dazu konfiguriert sind, die Erzeugung eines jeweiligen Sicherheitscodes auszulösen und den jeweiligen Sicherheitscode an den jeweiligen intermediären nicht vertrauenswürdigen Quantenknoten (150) weiterzuleiten, für den der Zugriff auf die Einschließung (151) beantragt wird.

13. . System nach einem der Ansprüche 9 bis 12, wobei der Zugriff für jeden der mindestens einen intermediären nicht vertrauenswürdigen Quantenknoten (150) mit einem anderen, speziell für diesen Zweck erstellten Sicherheitscode erfolgt.

14. . System nach einem der Ansprüche 9 bis 13, wobei die jeweilige mechanische robuste Einschließung (151) dazu ausgelegt ist, einen unbefugten Zugriff zu erkennen.

15. . Intermediärer nicht vertrauenswürdiger Quantenknoten (150), wie in dem System nach einem der Ansprüche 9 bis 14 definiert.

**Revendications**

1. Procédé pour contrôler une distribution de clé quantique entre un premier nœud quantique (110) et un second nœud quantique (120) sur de longues distances d'une connexion quantique incluant au moins un nœud quantique intermédiaire non fiable (150), chaque nœud quantique (110, 120, 150) comprenant au moins un module de distribution de clé quantique (112, 122, 152) et au moins un système de gestion de clé (113, 123, 153), le au moins un nœud quantique intermédiaire non fiable (150) étant situé sur la connexion quantique entre le premier nœud quantique (110) et le second nœud quantique (120), le procédé comprenant au moins :

a) la provision, au niveau du au moins un nœud quantique intermédiaire non fiable (150), d'un confinement mécanique robuste (151) entourant le au moins un module de distribution de clé quantique (152) et le au moins un système de gestion de clé (153), le confinement mécanique robuste (151) étant configuré pour prévenir un accès physique instantané au au moins un module de distribution de clé quantique (152) et au au moins un système de gestion de clé (153),

b) la fourniture, au niveau du au moins un nœud quantique intermédiaire non fiable (150), d'un confinement mécanique robuste (151) pourvu d'une unité d'entrée (154) pour saisir un code de sécurité respectif qui est utilisé pour autoriser une ouverture d'un couvercle du confinement mécanique robuste pour accéder au au moins un module de distribution de clé quantique (152) et au au moins un système de gestion de clé (153) du nœud quantique intermédiaire non fiable respectif (150),

c) génération du code de sécurité respectif à l'aide du matériel de chiffrement cryptographique qui est retenu pour usage propre d'une partie du matériel de chiffrement auto-généré entre le nœud quantique respectif du au moins un nœud quantique intermédiaire non fiable et le premier ou le second nœud quantique pendant la distribution de clé quantique et qui doit être mis à la disposition exclusive du premier nœud quantique (110) et/ou du second nœud quantique (120) demandant l'accès, et le nœud quantique respectif parmi le au moins un nœud quantique intermédiaire non fiable respectif (150), la génération du code de sécurité respectif étant initiée au niveau du premier nœud quantique ou du second nœud quantique, chacun représentant un client respectif.

2. . Procédé selon la revendication 1, la génération du code de sécurité respectif étant déclenchée par exactement un nœud quantique, le premier nœud quantique (110) ou le second nœud quantique (120), à l'aide d'une commande de gestion spécifique au code de sécurité respectif.

3. . Procédé selon la revendication 1 ou 2, le code de sécurité respectif étant généré de sorte qu'il possède un cycle de vie prédéterminé avant d'être éliminé.

4. . Procédé selon l'une quelconque des revendications précédentes, le code de sécurité respectif étant un code de sécurité quantique sécurisé.

5. . Procédé selon l'une quelconque des revendications précédentes, le premier nœud quantique (110) et/ou le second nœud quantique (120) pouvant demander à tout moment l'accès à un nœud quantique respectif parmi le au moins un nœud quantique intermédiaire non fiable (150) par saisie du code de sécurité respectif qui n'est connu que du premier nœud quantique (110) ou du second nœud quantique (120) et du nœud quantique respectif du au moins un nœud quantique intermédiaire non fiable (150), sur l'unité d'entrée du nœud quantique respectif du au moins un nœud quantique intermédiaire non fiable respectif (150).

6. . Procédé selon la revendication 5, le premier nœud quantique (110) et/ou le second nœud quantique (120) pouvant demander l'accès, à partir du premier nœud quantique (110) et/ou du second nœud quantique (120), le long de l'ensemble du au moins un nœud quantique intermédiaire non fiable (150) dans l'ordre exact dans lequel ils sont situés sur la connexion quantique.

7. . Procédé selon la revendication 5, le premier nœud quantique (110) et/ou le second nœud quantique (120) pouvant demander l'accès, à partir du premier nœud quantique (110) ou du second nœud quantique (120), de manière aléatoire, à un sous-ensemble du au moins un nœud quantique intermédiaire non fiable (150).

8. . Procédé selon la revendication 5, 6 ou 7, l'accès ayant lieu pour chacun du au moins un nœud quantique intermédiaire non fiable (150) grâce à un code de sécurité différent, spécialement créé à cet effet.

9. . Système pour contrôler une distribution de clé quantique entre un premier nœud quantique (110) et un second nœud quantique (120) sur de longues distances d'une connexion quantique incluant au moins un nœud quantique intermédiaire non fiable (150), le système comprenant au moins :

    - le au moins un nœud quantique intermédiaire non fiable (150) qui est situé sur la connexion quantique entre le premier nœud quantique (110) et le second nœud quantique (120) et qui comprend au moins un module de distribution de clé quantique (152) et au moins un système de gestion de clé (153) et un confinement mécanique robuste (151) entourant le au moins un module de distribution de clé quantique (152) et le au moins un système de gestion de clé (153), le confinement mécanique robuste (151) étant configuré pour prévenir un accès physique instantané au au moins un module de distribution de clé quantique (152) et au au moins un système de gestion de clé (153),

    - le premier nœud quantique (110) qui comprend au moins un module de distribution de clé quantique (112) et au moins un système de gestion de clé (113), et

    - le second nœud quantique (120) qui comprend au moins un module de distribution de clé quantique (122) et au moins un système de gestion de clé (123), et

au niveau de chacun du au moins un nœud quantique intermédiaire non fiable (150), le confinement mécanique robuste (151) étant doté d'une unité d'entrée (154) pour saisir un code de sécurité respectif qui est utilisé pour autoriser une ouverture d'un couvercle du confinement mécanique robuste pour accéder au au moins un module de distribution de clé quantique (152) et au au moins un système de gestion de clé (153) du nœud quantique intermédiaire non fiable respectif (150), le code de sécurité respectif étant généré à l'aide d'un matériel de chiffrement cryptographique qui a été retenu pour usage propre d'une partie du matériel de chiffrement auto-généré entre le nœud respectif du au moins un nœud quantique intermédiaire non fiable et le premier ou le second nœud quantique respectif pendant la distribution de clé quantique et qui doit être mis à la disposition exclusive du premier nœud quantique (110) et/ou du second nœud quantique (120) demandant l'accès, et du nœud quantique respectif du au moins un nœud quantique intermédiaire non fiable (150), la génération du code de sécurité respectif étant initiée au niveau du premier nœud quantique ou du second nœud quantique, chacun d'eux représentant un client respectif.

10. . Procédé selon la revendication 9, le code de sécurité respectif possédant un cycle de vie prédéterminé avant d'être éliminé.

11. . Procédé selon l'une quelconque des revendications 9 ou 10, le code de sécurité respectif étant un code de sécurité quantique sécurisé.

12. . Système selon l'une quelconque des revendications 9 à 11, le premier nœud quantique (110) et le second nœud quantique (120) étant chacun configuré pour déclencher la génération d'un code de sécurité respectif et pour transmettre le code de sécurité respectif au nœud quantique intermédiaire non fiable (150) dont l'accès au confinement (151) est demandé.

13. . Système selon l'une quelconque des revendications 9 à 12, l'accès ayant lieu pour chacun du au moins un nœud quantique intermédiaire non fiable (150) grâce à un code de sécurité différent, spécialement créé à cet effet.

14. . Système selon l'une quelconque des revendications 9 à 13, le confinement mécanique robuste (151) respectif étant conçu pour détecter un accès non autorisé.

15. . Nœud quantique intermédiaire non fiable (150) tel que défini dans le système selon l'une quelconque des revendications 9 à 14.

Figure 1

(prior art)

Figure 2

EP 3 905 094 B1

**REFERENCES CITED IN THE DESCRIPTION**

**Patent documents cited in the description**

- US 2010299526 A1